# EUROPEAN PATENT APPLICATION

(11) **EP 3 640 489 A1**
(43) Date of publication of application: **22.04.2020**
(21) Application number: 18818789.2
(22) Date of filing: 14.06.2018
(51) Int. Cl.: F16C 33/78, F16C 19/26, F16C 19/46

(54) **ROLLER BEARING**

(30) Priority: 16.06.2017 JP 2017118253; 21.05.2018 JP 2018097150
(71) Applicant: NTN Corporation, Osaka-shi, Osaka 550-0003 (JP)
(72) Inventor: TSUCHIYA, Masaru, Iwata-shi Shizuoka 438-8510 (JP); TERADA, Tomoaki, Iwata-shi Shizuoka 438-8510 (JP); MARUGAME, Seiya, Iwata-shi Shizuoka 438-8510 (JP)
(74) Representative: Bockhorni & Brüntjen Partnerschaft Patentanwälte mbB
(86) International application number: PCT/JP2018/022722
(87) International publication number: WO 2018/230641

(57) **Abstract**

A roller bearing (4) includes an outer ring (5) that has a cylindrical portion (51) of which an inner circumferential surface constitutes a raceway surface, and a flange portion (52) joined to at least one axial end portion of the cylindrical portion (51), a plurality of rollers (6) that roll on the raceway surface of the cylindrical portion (51) and rotatably support a rotating element (2), and a sealing member (7) that is held by the flange portion (52). The flange portion (52) has a first portion (52a) that extends radially inward from an end portion of the cylindrical portion (51) and a second portion (52b) that extends axially outward from a radial inner end portion of the first portion (52a).

## Description

### Technical Field

The present invention relates to a roller bearing, in particular, relates to a roller bearing that includes a sealing member.

### Background Art

Conventionally, there has been a roller bearing that includes a sealing member for the purpose of sealing lubricating oil inside the bearing or preventing fluids and foreign matters from entering from the outside.

For example, in U.S. Patent No. 9388772 (Patent Literature 1), thin edge portions are provided at both axial end portions of a cylindrical outer ring that does not have a flange extending radially inward, and a sealing member having a substantially S-shaped cross-sectional shape is fitted into the thin edge portions. This needle roller bearing is fitted into a housing of a fluid control valve of an internal combustion engine (engine), and the sealing member having a substantially S-shaped cross-sectional shape is disposed in close contact with the housing, thereby preventing fluid (exhaust gas) from entering the bearing.

### Citation List

### Patent Literature

Patent Literature 1: U.S. Patent No. 9388772

### Summary of Invention

### Technical Problem

In order to reinforce a sealing member included in a roller bearing, a core metal may be provided in the sealing member. However, the manufacturing cost of the sealing member increases in order to make the sealing member that includes the core metal. Therefore, providing a core metal in a sealing member has a problem that the manufacturing cost of the roller bearing increases.

In addition, in the roller bearing of Patent Literature 1, the edge portion of the outer ring extending axially outward is only surrounded by the sealing member having a substantially S-shaped cross-sectional shape, and a separate reinforcing metal fitting is required for reinforcing the sealing member.

Furthermore, since the thin edge portions provided at the both ends of the outer ring in Patent Literature 1 are disposed radially outside relative to the raceway surface of the outer ring, the axial movement (separation) of the roller and the retainer is restricted by the sealing member. Accordingly, the sealing member may be worn by contact with the roller or the retainer.

The present invention has been made in order to solve the above-described problem, and its object is to provide a preferred roller bearing capable of reinforcing a sealing member without providing a core metal and capable of preventing wear of the sealing member.

### Solution to Problem

A roller bearing according to an aspect of the present invention includes an outer ring, a plurality of rollers, and a sealing member. The outer ring has a cylindrical portion of which an inner circumferential surface constitutes a raceway surface, and a flange portion joined to at least one axial end portion of the cylindrical portion. The plurality of rollers roll on the raceway surface of the cylindrical portion and rotatably support a rotating element. The sealing member is held by the flange portion. The flange portion has a first portion extending radially inward from the end portion of the cylindrical portion and a second portion extending axially outward from the radial inner end portion of the first portion.

The roller bearing may further include a retainer that houses the rollers. In this case, it is desirable that the flange portion is disposed so as to restrict axial movement of the retainer.

Specifically, it is desirable that the retainer axially faces the radial inner end portion of the first portion of the flange portion.

Preferably, the sealing member includes an inner diameter side sealing portion disposed between the outer circumferential surface of the rotating element and the second portion of the flange portion.

When the outer ring is fitted in a housing, the sealing member preferably includes an outer diameter side sealing portion disposed between the inner circumferential surface of the housing and the second portion of the flange portion.

When the outer ring is fitted in the housing, the sealing member is more preferably disposed between the outer circumferential surface of the rotating element and the inner circumferential surface of the housing so as to surround the second portion of the flange portion.

Preferably, the plate thickness of the second portion of the flange portion is equal to or less than the plate thickness of the first portion.

Preferably, the sealing member includes a lip that is in contact with the outer circumferential surface of the rotating element.

More preferably, the sealing member includes a first region that is disposed between the inner circumferential surface of the housing into which the outer ring is fitted and the second portion of the flange portion and a second region that is disposed continuously to the axial outside of the first region between the inner circumferential surface of the housing and the outer circumferential surface of the rotating element and that has a lip that is in contact with the outer circumferential surface of the rotating element.

In this case, it is desirable that the first region is disposed in a contact state with the outer surface of the first portion of the flange portion, and the second region has a facing portion that faces the axial outer end surface of the second portion of the flange portion in a non-contact state.

In addition, it is desirable that the facing portion includes a root portion of the lip.

Preferably, the axis of the outer diameter surface or the inner diameter surface of the second portion of the flange portion is disposed inside an imaginary circle having a diameter of 0.5 mm about the axis of the inner circumferential surface of the housing.

Preferably, the outer ring has the flange portion only on one axial side of the cylindrical portion, and has an inward flange portion extending radially inward on the other axial side of the cylindrical portion.

### Advantageous Effects of Invention

According to the present invention, the sealing member is held by the flange portion that has the first portion extending radially inward from the end portion of the cylindrical portion of the outer ring and the second portion extending axially outward from the radial inner end portion of the first portion. Accordingly, the sealing member can be reinforced by the flange portion of the outer ring without separately providing a core metal.

According to an aspect of the present invention, the flange portion of the outer ring restricts axial movement of the roller or the retainer, and hence it is possible to prevent wear of the sealing member due to contact with the roller or the retainer.

### Brief Description of Drawings

[Fig. 1] Fig. 1 is a sectional view schematically showing a configuration of a roller bearing according to an embodiment of the present invention.
[Fig. 2] Fig. 2 is an enlarged partial sectional view of the region II of Fig. 1.
[Fig. 3] Fig. 3 is a partial sectional view schematically showing another shape example of the flange portion of the outer ring.
[Fig. 4] Fig. 4 is a partial sectional view schematically showing another shape example of the sealing member held by the flange portion of the outer ring.
[Fig. 5] Fig. 5 is a partial sectional view schematically showing yet another shape example of the sealing member held by the flange portion of the outer ring.
[Fig. 6] Fig. 6 is a partial sectional view schematically showing yet another shape example of the sealing member held by the flange portion of the outer ring.
[Fig. 7] Fig. 7 is a partial sectional view schematically showing yet another shape example of the sealing member held by the flange portion of the outer ring.
[Fig. 8] Fig. 8 is a partial sectional view schematically showing yet another shape example of the sealing member held by the flange portion of the outer ring.
[Fig. 9] Fig. 9 is a view schematically showing a shape example of the end face of the flange portion of the outer ring.
[Fig. 10] Fig. 10 is an outline sectional view schematically showing a main part of an EGR control valve to which a roller bearing according to an embodiment of the present invention is applied.
[Fig. 11] Fig. 11 is a sectional view schematically showing a configuration of a roller bearing according to a modification 1 of an embodiment of the present invention.

### Description of Embodiments

An embodiment of the present invention will be described in detail with reference to the drawings. In the drawings, the same or corresponding parts are given the same reference numerals, and the description thereof will not be repeated.

### (Outline configuration of roller bearing)

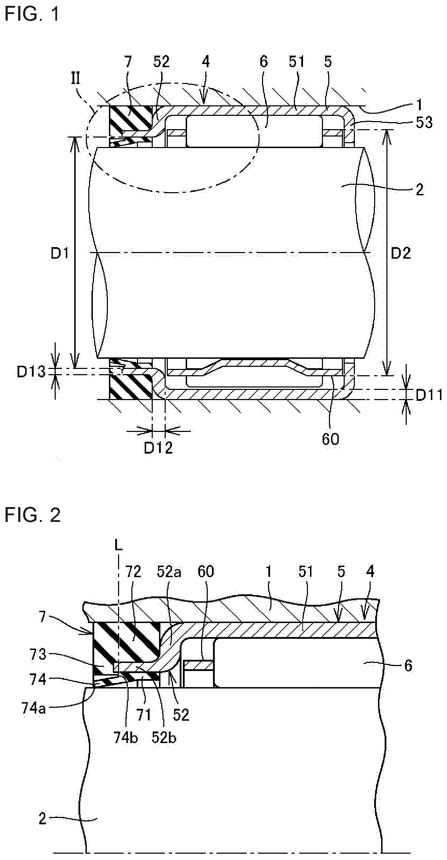

With reference to Figs. 1 and 2, an outline configuration of a roller bearing 4 according to the present embodiment will be described. Fig. 1 is a sectional view schematically showing the configuration of the roller bearing 4 according to the present embodiment. Fig. 2 is an enlarged partial sectional view of the region II of Fig. 1.

As shown in Fig. 1, the roller bearing 4 is a shell type roller bearing housed in a cylindrical hole portion of a housing 1, and includes a shell type outer ring (hereinafter abbreviated as "outer ring") 5, a plurality of rollers 6, and an annularly formed sealing member 7. In Fig. 1, the center line of the roller bearing 4 is shown by a one-dot chain line. In the following description, the direction along the center line of the roller bearing 4 is referred to as "axial (direction)", and the direction orthogonal to the center line of the roller bearing 4 is referred to as "radial (direction)".

The outer ring 5 is press-fitted into the hole portion of the housing 1 and has a cylindrical portion 51 and a pair of flange portions 52 and 53 that are provided at both axial end portions of the cylindrical portion 51, respectively. The inner circumferential surface of the cylindrical portion 51 constitutes a raceway surface of the roller 6.

As shown in Fig. 2, the flange portion 52 on one axial side (left side on the drawing) of the pair of flange portions 52 and 53 has a first portion 52a extending radially inward from an end portion of the cylindrical portion 51 and a second portion 52b extending axially outward from the radial inner end portion of the first portion 52a.

The flange portion 53 on the other axial side (right side on the drawing) of the pair of flange portions 52 and 53 corresponds to an inward flange of a general shell type outer ring, and extends straight radially inward. In the following description, in order to make it easy to distinguish the flange portions 52 and 53, the flange portion 53 having a general flange shape is referred to as the "inward flange portion 53".

The first portion 52a of the flange portion 52 is disposed substantially parallel to the inward flange portion 53. That is, the first portion 52a radially extends so that the angle with the cylindrical portion 51 is substantially a right angle. The first portion 52a of the flange portion 52 and the inward flange portion 53 face the end face of the roller 6.

The second portion 52b of the flange portion 52 is disposed substantially parallel to the cylindrical portion 51. That is, the second portion 52b axially extends so that the angle with the first portion 52a is substantially a right angle. Note that the boundary portion between the cylindrical portion 51 and the first portion 52a and the boundary portion between the first portion 52a and the second portion 52b have an R shape in terms of processing.

A plate thickness D13 of the second portion 52b is preferably equal to or less than a plate thickness D12 of the first portion 52a. The plate thickness D12 of the first portion 52a may be equal to or greater than a plate thickness D11 of the cylindrical portion 51.

The plurality of rollers 6 roll on the raceway surface of the outer ring 5 and rotatably support a rotation shaft 2. The roller 6 is a needle roller. That is, the roller bearing 4 according to the present embodiment is a shell type needle roller bearing. The rotating element rotatably supported by the plurality of rollers 6 is not limited to the rotation shaft 2, and may be an inner ring (not shown) included in the roller bearing 4. The roller bearing 4, the rotation shaft 2 supported by the roller bearing 4, and the housing 1 constitute a rotation shaft support structure.

In order to reduce the rotational torque of the rotation shaft 2, the plurality of rollers 6 are held by a retainer 60. The retainer 60 has a plurality of pockets in which houses the plurality of rollers 6, respectively. Since the plurality of pockets are provided at regular intervals in the circumferential direction, the intervals between the plurality of rollers 6 are kept constant by the retainer 60. The retainer 60 axially faces the radial inner end portion of the first portion 52a of the flange portion 52.

The sealing member 7 is held by the flange portion 52 and includes at least a lip 74 that is in sliding contact with the rotation shaft 2. The sealing member 7 is sandwiched between the outer circumferential surface of the rotation shaft 2 and the inner circumferential surface of the housing 1, and is disposed so as to surround the second portion 52b of the flange portion 52. The entire sealing member 7 is disposed axially outside relative to the first portion 52a of the flange portion 52.

The sealing member 7 is an elastic body, and examples of its material include nitrile rubber, acrylic rubber, silicone rubber, and fluorine rubber, for example. A specific configuration example of the sealing member 7 will be described later. In the present embodiment, no sealing member is disposed on the inward flange portion 53 side.

Here, a (minimum) inner diameter dimension D1 of the second portion 52b of the flange portion 52 is smaller than an outer diameter dimension D2 of the retainer 60. Due to this, movement (separation) of the rollers 6 and the retainer 60 toward one axial side is restricted by the flange portion 52. Specifically, the flange portion 52 is disposed so as to be able to be in contact with the retainer 60 in the first portion 52a. The movement of the rollers 6 and the retainer 60 toward the other axial side is restricted by the inward flange portion 53 of the outer ring 5.

Manufacturing methods of the outer ring 5 include, for example, a method in which a cold-rolled steel sheet is formed by drawing and then its hardness is increased by heat treatment. In this case, the second portion 52b of the flange portion 52 is formed by punching out the center portion of the bottom portion of a cup formed by drawing processing, and then performing burring processing while thinning the inner circumferential side portion of the annular bottom portion. The remaining portion of the annular bottom portion, i.e., the outer circumferential side portion, corresponds to the first portion 52a of the flange portion 52.

In the case where the outer ring 5 is processed by drawing formation, the elastic recovery after plastic processing can be prevented by performing the ironing processing at the same time as the burring processing. Due to this, the angle and plate thickness of the second portion 52b of the flange portion 52 can be stabilized, and hence it is possible to improve the mountability of the sealing member 7, stabilize the rigidity of the sealing member 7, and stabilize the sealing performance of the sealing member 7.

The inward flange portion 53 can be formed by bending processing. The inward flange portion 53 may be thinner than the cylindrical portion 51 in order to facilitate bending processing.

The formation method of the flange portion 52 is not limited to the burring processing described above. For example, a method in which a cup bottom that includes the first portion 52a and the second portion 52b is formed at the time of drawing, and a center portion of the cup bottom is punched out with a mold may be employed.

The manufacturing method of the outer ring 5 is not limited to the drawing processing as described above, and may be manufactured by cutting the outer ring from a steel material. In this case, since the elastic recovery as in the drawing processing does not occur, the plate thickness of the second portion 52b of the flange portion 52 is not particularly limited.

As a manufacturing method of the retainer 60, for example, there is a method in which a pocket is punched out from a rolled steel plate, and the rolled steel plate is bent in an annular shape to weld the end portion. According to this manufacturing method, the manufacturing cost of the retainer 60 can be reduced. Alternatively, the annular shape may be formed by drawing with press, or may be manufactured by cutting a steel pipe. The material of the retainer 60 is not limited to metal, and may be resin.

### (Configuration example of sealing member)

With reference to Fig. 2, a specific configuration example of the sealing member 7 will be described.

As described above, the sealing member 7 is disposed between the outer circumferential surface of the rotation shaft 2 and the inner circumferential surface of the housing 1 so as to surround the second portion 52b of the flange portion 52. Therefore, the sealing member 7 includes an inner diameter side sealing portion 71 positioned between the outer circumferential surface of the rotation shaft 2 and the second portion 52b of the flange portion 52, and an outer diameter side sealing portion 72 positioned between the inner circumferential surface of the housing 1 and the second portion 52b of the flange portion 52. The inner diameter side sealing portion 71 and the outer diameter side sealing portion 72 are integrally connected by an outer sealing portion 73 positioned axially outside relative to the second portion 52b of the flange portion 52.

The inner diameter side sealing portion 71 is disposed in close contact with the inner diameter surface of the second portion 52b of the flange portion 52. The inner diameter side sealing portion 71 does not overlap the axial position with the first portion 52a of the flange portion 52. That is, the inner diameter side sealing portion 71 is disposed to be offset axially outside relative to the position of the first portion 52a. In the present embodiment, a root portion 74b of the lip 74 is included in the inner diameter side sealing portion 71, and the lip 74 obliquely extends outward in the axial direction.

The outer diameter side sealing portion 72 is in close contact with both the inner circumferential surface of the housing 1 and the outer diameter surface of the second portion 52b. At least a part of the axial inner surface of the outer diameter side sealing portion 72 is in close contact with the axial outer surface of the first portion 52a of the flange portion 52.

The outer sealing portion 73 is in close contact with the axial outer end surface of the second portion 52b, and is in close contact with the inner circumferential surface of the housing 1 integrally with the outer diameter side sealing portion 72.

In this manner, the entire second portion 52b of the flange portion 52 is in a state of entering the inside of the sealing member 7. Furthermore, the second portion 52b of the flange portion 52 extends axially outside relative to an axial position (position of the axial outer end edge) L of the root portion 74b of the lip 74. Due to this, according to the present embodiment, it is possible to cause the second portion 52b of the flange portion 52 to function as a core metal of the sealing member 7.

Accordingly, it is possible to increase the contact force of the lip 74 of the sealing member 7 with respect to the rotation shaft 2 and the contact force of the outer diameter side sealing portion 72 of the sealing member 7 with respect to the housing 1. As a result, the sealing performance of the sealing member 7 can be increased, similarly to the case where the core metal is provided in the sealing member.

In a case of the sealing member without the core metal, it is necessary to increase the sealing performance by greatly deforming the sealing member, and hence high stress is generated inside the sealing member. Therefore, in such a case, there is a possibility that a crack is generated in the sealing member and the sealing property is impaired. On the other hand, in the present embodiment, the sealing property can be increased by the second portion 52b of the flange portion 52 serving as the core metal of the sealing member 7, and hence it is not necessary to generate high stress inside the sealing member 7. Therefore, according to the present embodiment, it is possible to prevent or suppress a crack in the sealing member 7.

Furthermore, according to the present embodiment, it is not necessary to incorporate the core metal in the sealing member 7 itself, and hence the manufacturing cost of the sealing member 7 can be reduced. In addition, a part of the flange portion 52 of the outer ring 5, which is a shell type outer ring, functions as a core metal, and hence the manufacturing cost of the entire roller bearing 4 can be reduced.

Furthermore, the inner diameter side sealing portion 71 is disposed so as not to protrude axially inward relative to the position of the first portion 52a of the flange portion 52, and hence the sealing member 7 does not come into contact with the retainer 60. Accordingly, wear of the sealing member 7 can be prevented.

The sealing member 7 may further have one or more lips in addition to the lip 74 described above. That is, the sealing member 7 may have a plurality of lips. For example, by providing a lip (not illustrated) on the outer circumferential surface of the sealing member 7, the contact force of the sealing member 7 on the housing 1 side can be more sufficiently increased. Even in this case, it is desirable that the axial position of the root portion of the lip is positioned axially inward relative to the tip position of the second portion 52b of the flange portion 52.

As a holding (fixing) method of the sealing member 7, for example, the sealing member 7 may be held by increasing the surface roughness of the flange portion 52, or it may be held by hooking the sealing member 7 by narrowing a part of the flange portion 52. Alternatively, a projection having a burr may be provided on a portion of the sealing member 7 that is in contact with the flange portion 52 to prevent the sealing member 7 from coming off.

The sealing member 7 may be fixed using an adhesive after being inserted into the second portion 52b of the flange portion 52, or the sealing member 7 may be injected and molded including the outer ring 5, and the method is not limited.

### (Other shape examples of the flange portion)

The shape of the flange portion 52 of the outer ring 5 is not limited to the shape shown in Fig. 2.

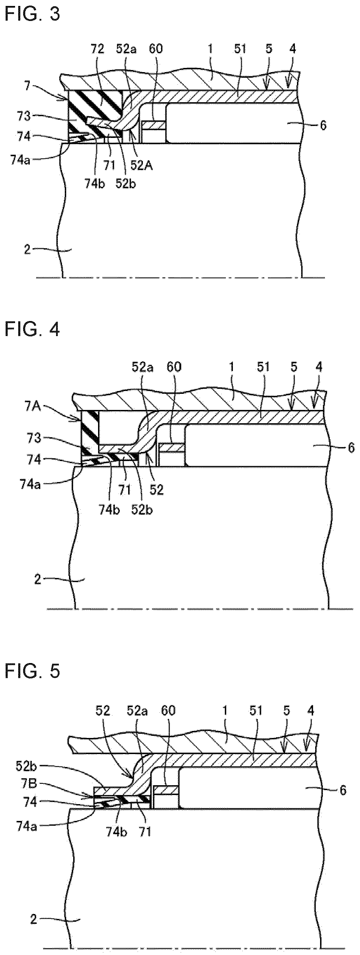

For example, as shown in Fig. 3, the second portion 52b of a flange portion 52A may slightly tilt. The second portion 52b of the flange portion 52A slightly tilts so that its inner diameter dimension gradually increases toward the axial outside.

As an unillustrated shape example, the first portion 52a of the outer ring 5 may slightly tilt.

### (Other shape examples of the sealing member)

The shape of the sealing member 7 held by the flange portion 52 of the outer ring 5 is not limited to the shape shown in Fig. 2.

For example, as shown in Fig. 4, a sealing member 7A may not have the outer diameter side sealing portion 72 shown in Fig. 2. In this case, only the outer sealing portion 73 positioned axially outside relative to the second portion 52b of the flange portion 52 is disposed in close contact with the inner circumferential surface of the housing 1. Also in this example, by bonding the inner diameter side sealing portion 71 to the inner diameter surface of the second portion 52b, the sealing member 7A can be reinforced by the flange portion 52 of the outer ring 5.

The bonding of the sealing member 7A to the flange portion 52 may be realized by, for example, an adhesive or may be realized by heat welding.

As shown in Fig. 5, a sealing member 7B may not have the outer sealing portion 73 as well as the outer diameter side sealing portion 72. In this case, the entire lip 74 is included in the inner diameter side sealing portion 71, and a tip portion 74a of the lip 74 is pressed against the outer circumferential surface of the rotation shaft 2 by the second portion 52b of the flange portion 52.

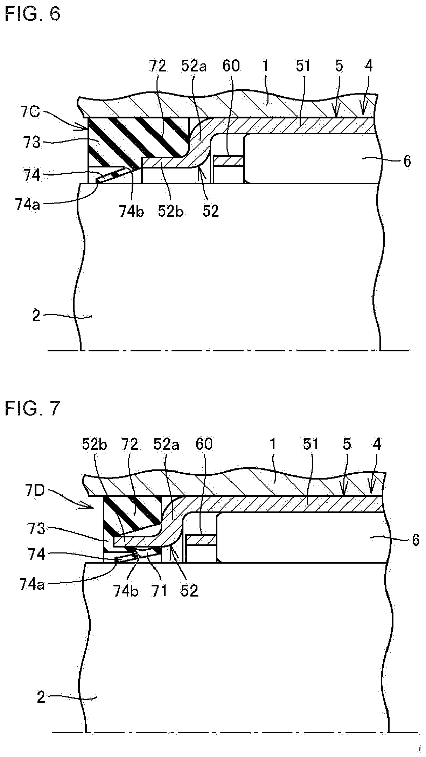

Alternatively, as shown in Fig. 6, a sealing member 7C may not have the inner diameter side sealing portion 71 shown in Fig. 2. In this case, the entire lip 74 is included in the outer sealing portion 73. Also in this example, by bonding the outer diameter side sealing portion 72 to the outer diameter surface of the second portion 52b, the sealing member 7C can be reinforced by the flange portion 52 of the outer ring 5.

Also, as shown in Fig. 7, even in a case where a sealing member 7D is disposed so as to surround the second portion 52b of the flange portion 52, the seal shape around the second portion 52b of the flange portion 52 may be appropriately changed. Due to this, the contact force of the sealing member 7D with respect to the housing 1 side and the rotation shaft 2 side can be adjusted, and the fitting (mounting) of the sealing member 7D into the second portion 52b of the flange portion 52 can be simplified.

As shown in Fig. 6, in an embodiment in which the entire lip 74 is included in the outer sealing portion 73, the radial dimension of the lip 74 from the root portion 74b to the tip portion 74a can be made larger than that in an embodiment in which at least the root portion 74b of the lip 74 is included in the inner diameter side sealing portion 71 as shown in Fig. 2 and the like. Therefore, from a viewpoint of improvement of the strength of the lip 74 and the workability of the sealing member, it is desirable that the entire lip 74 is included in the outer sealing portion 73.

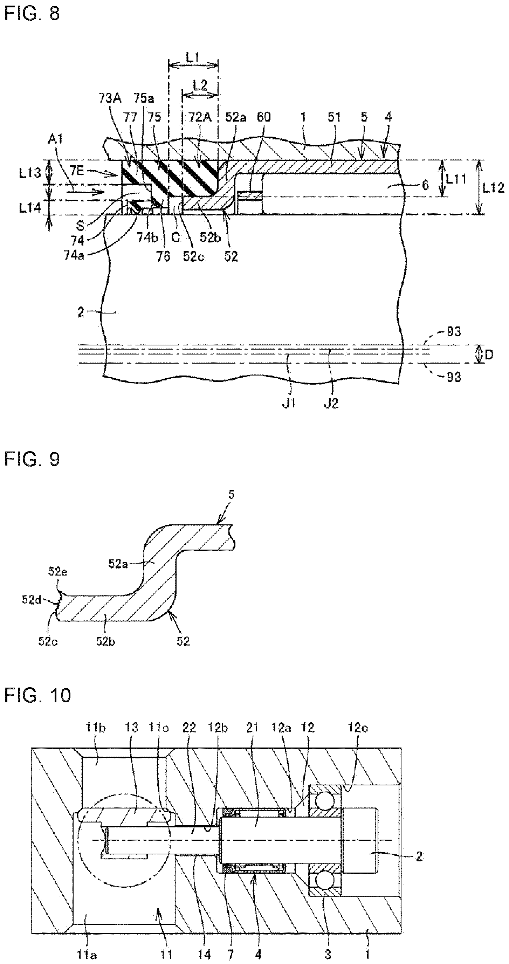

Fig. 8 schematically shows another shape example of the sealing member configured such that the entire lip 74 is included in the outer sealing portion 73. Similarly to the sealing member 7C shown in Fig. 6, a sealing member 7E shown in Fig. 8 consists of an outer diameter side sealing portion 72A and an outer sealing portion 73A. The outer diameter side sealing portion 72A corresponds to a region (first region) of the sealing member 7E disposed between the inner circumferential surface of the housing 1 and the second portion 52b of the flange portion 52 of the outer ring 5. The outer sealing portion 73A is positioned in the sealing member 7E on the axially outside relative to the second portion 52b of the flange portion 52 of the outer ring 5, and corresponds to a region (second region) disposed between the inner circumferential surface of the housing 1 and the outer circumferential surface of the rotation shaft 2. The outer diameter side sealing portion 72A and the outer sealing portion 73A are integrally formed continuously in the axial direction.

The outer diameter side sealing portion 72A is disposed in a state of being in contact (surface contact) with the outer circumferential surface of the second portion 52b of the flange portion 52 and also in contact (surface contact) with the axial outer surface of the first portion 52a of the flange portion 52. The outer diameter side sealing portion 72A may not be in contact with the axial outer surface of the first portion 52a.

The outer sealing portion 73A has a main body portion 75 positioned radially outside relative to a position (position of the outer circumferential surface of the second portion 52b of the flange portion 52) of an inner circumferential surface of the outer diameter side sealing portion 72A, a facing portion 76 that protrudes radially inward relative to a position of the inner circumferential surface of the outer diameter side sealing portion 72A and faces an end surface 52c of the second portion 52b of the flange portion 52, and the lip 74 extending (obliquely) axially outward from the radial inner end portion of the facing portion 76.

The root portion 74b of the lip 74 is disposed within the thickness range of the second portion 52b of the flange portion 52. The root portion 74b of the lip 74 is included in the facing portion 76. The lip 74 may extend obliquely toward the axial outside directly from the radial inner end portion of the main body portion 75.

Here, as shown in Fig. 8, the facing portion 76 of the outer sealing portion 73A is not in contact with the end surface 52c of the second portion 52b of the flange portion 52. In this regard, there is a large difference from the sealing member 7C shown in Fig. 6.

Specifically, an axial length L1 from the position of the axial inner end surface of the outer diameter side sealing portion 72A to the facing portion 76 of the outer sealing portion 73A is longer than an axial length L2 of the second portion 52b of the flange portion 52. The axial length L2 corresponds to the axial length of the second portion 52b starting from the position of the outer surface of the first portion 52a of the flange portion 52. Due to this, a gap C is formed between the end surface 52c of the flange portion 52 and the facing portion 76 (that is, the root portion 74b of the lip 74) of the outer sealing portion 73A. In Fig. 8, the gap C is exaggerated for ease of understanding.

When an interval L12 between the inner circumferential surface of the housing 1 and the outer circumferential surface of the rotation shaft 2 is approximately 2.0 mm, the difference between the axial lengths L1 and L2 is preferably 0.1 mm or more. That is, the difference between the axial lengths L1 and L2 is preferably equal to or greater than 1/20 of the interval L12. In consideration of the axial dimension of the entire sealing member 7E, it is also preferable that the difference between the axial lengths L1 and L2 may also be equal to or less than 1/10 (0.2 mm or less) of the interval L12.

The main body portion 75 of the outer sealing portion 73A has a protrusion portion 77 that protrudes axially outward relative to the position of the root portion 74b of the lip 74. The protrusion portion 77 faces the outer diameter surface of the lip 74 and receives reaction force of the lip 74. The outer circumferential surface of the main body portion 75 including the protrusion portion 77 is disposed in close contact with the inner circumferential surface of the housing 1. The outer circumferential surface of the main body portion 75 of the outer sealing portion 73 forms one cylindrical surface together with the outer circumferential surface of the outer diameter side sealing portion 72A.

A radial thickness dimension L13 of the protrusion portion 77 is larger than a radial thickness dimension (radial dimension from the root portion 74b to the tip portion 74a) L14 of the lip 74. Due to this, the strength of the protrusion portion 77 becomes higher than the strength of the lip 74, and hence deformation of the protrusion portion 77 hardly affects deformation of the lip 74.

Unlike the embodiment shown in Fig. 6, the thickness dimension L13 of the protrusion portion 77 may be smaller than a thickness dimension L11 of the outer diameter side sealing portion 72A. Due to this, the sectional shape of the main body portion 75 becomes substantially L-shaped.

In this case, a space S that is surrounded by the inner circumferential surface of the protrusion portion 77, the outer radial surface of the lip 74, and an annular surface 75a facing axially outward and that opens axially outward is formed between the protrusion portion 77 and the lip 74. The annular surface 75a is a surface that radially extends and has the root portion 74b of the lip 74 as an inner circumference and the axial inner end edge of the inner circumferential surface of the protrusion portion 77 as an outer circumference. The annular surface 75a may be an orthogonal surface that is orthogonal to the axial direction, or may be a tapered surface that widens toward the outer circumference.

When the sealing member 7E as shown in Fig. 8 is attached to the flange portion 52 of the outer ring 5, the inner diameter surface of the outer diameter side sealing portion 72A comes into surface contact with the outer diameter surface of the second portion 52b of the flange portion 52 in a state where the outer diameter side sealing portion 72A comes into surface contact with the outer surface of the first portion 52a of the flange portion 52. The sealing member 7E has a fastening allowance on the outer circumferential side. Due to this, the sealing member 7E is sandwiched between the inner circumferential surface of the housing 1 and the second portion 52b of the flange portion 52, and hence it is possible to cause the second portion 52b of the flange portion 52 to function as a core metal of the sealing member 7E also in this embodiment.

In order to prevent the sealing member 7E from falling off, it is preferable that the outer diameter side sealing portion 72A is fixed with a publicly known method (adhesive bonding, heat fusion, and the like) to at least one of the outer surface of the first portion 52a of the flange portion 52 and the outer diameter surface of the second portion 52b of the flange portion 52.

In the example of Fig. 8, the gap C is provided between the root portion 74b of the lip 74 and the end surface 52c of the flange portion 52. In a case where the root portion 74b of the lip 74 is disposed in contact with the end surface 52c of the flange portion 52, when pressure from the axial outside is applied to the lip 74, the root portion 74b does not move and only the tip portion of the lip 74 moves, and hence there is a concern about wear of the tip portion of the lip 74. On the other hand, in this example, since there is the gap C between the root portion 74b of the lip 74 and the end surface 52c of the flange portion 52, the entire lip 74 including the root portion 74b can resist the pressure (pressure in the direction of an arrow A1) from the axial outside. This suppresses the force applied to the tip portion (sliding contact portion with the rotation shaft 2) 74a of the lip 74, and thus wear of the lip 74 can be prevented.

Even if pressure is applied from the axial outside, the root portion 74b of the lip 74 does not abut against the end surface 52c of the flange portion 52. Therefore, even when the second portion 52b of the flange portion 52 is thin in thickness, it is possible to prevent deformation of the second portion 52b due to pressure from the axial outside.

Furthermore, by preventing the sealing member 7E from coming into contact with the end surface 52c of the flange portion 52, it is possible to prevent damage to the sealing member 7E even when the entire end surface 52c is not a smooth surface. Specifically, when the outer ring 5 is formed by press shearing, in the process of punching the center portion of the bottom portion of the cup with a punch (jig), a burr and a fracture surface with severe unevenness are generated on the cut surface of the bottom portion of the cup. For this reason, a fracture surface 52d and a burr 52e remain on the end surface 52c of the second portion 52b as shown in Fig. 9, meanwhile an outer surface 52f of the first portion 52a and the outer diameter surface of the second portion 52b of the flange portion 52 are smooth surfaces. The burr 52e is formed at a corner on the outer diameter side of the end surface 52c. In Fig. 9, the unevenness of the fracture surface 52d and the burr 52e are shown in an exaggerated manner.

Even when the end surface 52c of the flange portion 52 has the fracture surface 52d and the burr 52e, the facing portion 76 including the root portion 74b of the lip 74 does not come into contact with the end surface 52c of the flange portion 52, and hence it is possible to prevent damage to the sealing member 7E even at a time of high load. Furthermore, the force applied from the axial outside to the axial outer end surface of the main body portion 75 of the outer sealing portion 73A is directed axially inward and received by the outer surface of the first portion 52a of the flange portion 52. As described above, since no force is applied in the direction toward the burr 52e, it is possible to make it difficult to be affected by the burr 52e (even if the burr 52e is slightly in contact with the boundary portion between the main body portion 75 of the outer sealing portion 73A and the outer diameter side sealing portion 72A).

Since the radial dimension of the space S between the outer diameter surface of the lip 74 and the inner circumferential surface of the protrusion portion 77 is relatively large, a force to press the protrusion portion 77 against the inner circumferential surface of the housing 1 is exerted when a high-pressure fluid enters the space S. Therefore, the sealing member 7E has a structure in which a force is less likely to be transmitted to the lip 74 than the sealing member 7C shown in Fig. 6. Due to this, the lip 74 can be stably brought into contact with the rotation shaft 2, and hence an increase in the operating torque of the rotation shaft 2 can be prevented.

Since the sealing member (7, 7A, ..., or 7E) described above is disposed in a state of being in surface contact with at least one of the outer diameter surface and the inner diameter surface of the second portion 52b of the flange portion 52, there is an advantage that alignment of the sealing member with the outer ring 5 is made easy.

Specifically, in a case where the shell type outer ring is formed by pressing using a thin band steel as a material and is manufactured by increasing hardness by heat treatment, there is a characteristic that the circularity of the raceway surface (inner circumferential surface of the cylindrical portion) increases due to anisotropy of the thin band steel or heat treatment strain. The outer diameter dimension of the cylindrical portion of the outer ring is manufactured to be larger than the diameter of the inner circumferential surface of the housing 1, and the cylindrical portion has a characteristic of being deformed by the pressure received from the housing 1 when press-fitted into the housing 1. Therefore, it is difficult to use the raceway surface of the shell type outer ring as a reference surface for alignment of the sealing member. On the other hand, in the present embodiment, the flange portion 52 of the outer ring 5 has the second portion 52b disposed apart from the inner circumferential surface of the housing 1 in the attached state, and hence the outer diameter surface or the inner diameter surface of the second portion 52b can be used as a reference surface for alignment of the sealing member.

Since the axial dimension of the second portion 52b is sufficiently shorter than the axial dimension of the cylindrical portion 51 and the second portion 52b is formed by axially outwardly bending a steel material that extends radially inward, the strength is relatively high. Therefore, even if heat treatment is carried out at the time of manufacturing the outer ring 5 according to the present embodiment, there is a low possibility of distortion that occurs on the outer diameter surface or the inner diameter surface of the second portion 52b.

In order to use the outer diameter surface or the inner diameter surface of the second portion 52b as a reference surface for alignment of the sealing member, the axis of the outer diameter surface or the inner diameter surface of the second portion 52b of the flange portion 52 may be disposed inside an imaginary circle having a diameter of 0.5 mm about the axis of the inner circumferential surface of the housing 1. In Fig. 8, an outer circumferential position of an imaginary circle having a diameter D = 0.5 mm about an axis J1 of the inner circumferential surface of the housing 1 is schematically shown by a one-dot chain line 93. An axis J2 of the outer diameter surface or the inner diameter surface of the second portion 52b of the flange portion 52 ideally coincides with the axis J1 of the inner circumferential surface of the housing 1, but it may be disposed inside this imaginary circle.

When the thickness of the second portion 52b (corresponding to the dimension D13 in Fig. 1) is larger than the thickness of the cylindrical portion 51 (corresponding to the dimension D11 in Fig. 1), there is a further lower possibility of distortion that occurs on the outer diameter surface or the inner diameter surface of the second portion 52b. Thus, from the viewpoint of the alignment of the sealing member and the strength of the second portion 52b, the thickness of the second portion 52b is preferably equal to or greater than the thickness of the cylindrical portion 51. The thickness of the second portion 52b may be equal to or greater than the thickness of the first portion 52a. Furthermore, the thickness of each of the first portion 52a and the second portion 52b may be larger than the thickness of the inward flange portion 53 shown in Fig. 1. The inner diameter dimension of the second portion 52b may be smaller than the inner diameter dimension of the inward flange portion 53.

In this case, the processing of the flange portion 52 can be carried out as follows. That is, the second portion 52b of the flange portion 52 may be simultaneously processed when the outer circumferential surface and the inner circumferential surface of the cylindrical portion 51 is processed by pressing, and the flange portion 52 may be manufactured so that the axis center of the second portion 52b and the axis center of the cylindrical portion 51 are aligned with each other in a state where the outer ring 5 is restrained in the mold.

### (Application examples of the roller bearing)

An application of the roller bearing 4 according to the present embodiment will now be described. The roller bearing 4 can be applied to a fluid control valve such as an EGR (Exhaust Gas Recirculation) control valve, for example. That is, the roller bearing 4 is a roller bearing for an EGR control valve.

Fig. 10 is an outline sectional view schematically showing a main part of an EGR control valve to which the roller bearing 4 according to the present embodiment is applied. The EGR control valve is an exhaust gas flow rate control valve (exhaust throttle valve) that variably controls the flow rate of the exhaust gas recirculated (refluxed) from the exhaust passage to the intake passage through an exhaust gas flow path 11 by continuously or gradually changing the opening area of the exhaust gas flow path 11 formed in the housing 1.

The housing 1 is provided with a cylindrical hole portion 12 that intersects with the exhaust gas flow path 11, and the rotation shaft 2 and a support mechanism that rotatably supports the rotation shaft 2 are housed in the hole portion 12. The hole portion 12 of the housing 1 has a center hole portion 12a positioned in the axial center, a small-diameter hole portion 12b that is positioned on one axial side (left side of the drawing) of the center hole portion 12a and is smaller in diameter than the center hole portion 12a, and a large-diameter hole portion 12c that is positioned on the other axial side (right side of the drawing) of the center hole portion 12a and is larger in diameter than the center hole portion 12a.

The rotation shaft 2 has a large-diameter portion 21 that is supported by the support mechanism, and a small-diameter portion 22 that is smaller in diameter than the large-diameter portion 21 and is positioned adjacent to one axial side of the large-diameter portion 21. The tip portion of the small-diameter portion 22 protrudes to the gas flow path 11 and is joined and fixed to a valve body 13 in the gas flow path 11. The large-diameter portion 21 of the rotation shaft 2 is housed in the center hole portion 12a and the large-diameter hole portion 12c of the housing 1, and the other axial end portion of the small-diameter portion 22 of the rotation shaft 2 is housed in the small-diameter hole portion 12b of the housing 1. In Fig. 10, the axis of the rotation shaft 2 is indicated by a one-dot chain line.

The valve body 13 has a circular shape in plan view. The posture (position) of the valve body 13 is changed between the fully closed position and the fully open position according to the rotation angle of the rotation shaft 2. In Fig. 10, the valve body 13 in the fully closed position is indicated by a solid line, and the valve body 13 in the fully open position is indicated by an imaginary line (two-dot chain line).

The exhaust gas flow path 11 has a flow path 11a on the exhaust passage side and a flow path 11b on the intake passage side, and the exhaust gas flows from the flow path 11a side to the flow path 11b side. In this example, the flow path 11a is formed to be larger than the flow path 11b in diameter (inner diameter), and a step portion 11c is provided between these flow paths 11a and 11b. The diameter (outer diameter) of the valve body 13 is smaller than the diameter of the flow path 11a and larger than the diameter of the flow path 11b.

When the valve body 13 is positioned in the fully closed position, the valve body 13 is fitted into the step portion 11c of the exhaust gas flow path 11. Due to this, an annular gap between the inner circumferential surface of the exhaust gas flow path 11 and the outer circumferential end surface of the valve body 13 is completely sealed. In this case, the exhaust gas is not mixed into clean intake air (fresh air) that has passed through the air cleaner.

When the valve body 13 is positioned in the open position, the outer circumferential portion of the valve body 13 is not brought into contact with the step portion 11c of the gas flow path 11. In this case, the exhaust gas is mixed into clean intake air (fresh air) that has passed through the air cleaner.

The support mechanism includes one ball bearing 3 and one above-described roller bearing 4. The ball bearing 3 and the roller bearing 4 rotatably support the large-diameter portion 21 of the rotation shaft 2 with respect to the housing 1. Since the support mechanism includes not only the roller bearing 4 but also the ball bearing 3, the axial position of the rotation shaft 2 is fixed. The ball bearing 3, the roller bearing 4, the rotation shaft 2 supported by these bearings 3 and 4, and the housing 1 constitute a rotation shaft support structure.

The outer diameter dimension of the ball bearing 3 is larger than that of the roller bearing 4. The ball bearing 3 is press-fitted into the large-diameter hole portion 12c of the housing 1, and the roller bearing 4 is press-fitted into the center hole portion 12a of the housing 1. The roller bearing 4 is provided on the exhaust gas flow path 11 side relative to the ball bearing 3.

In the EGR control valve, it is assumed that the exhaust gas in the exhaust gas flow path 11 enters the center hole portion 12a in which the roller bearing 4 is disposed through an annular gap 14 between the inner circumferential surface of the hole portion 12 (small-diameter hole portion 12b) of the housing 1 and the outer circumferential surface of the small-diameter portion 22 of the rotation shaft 2. Since the roller bearing 4 includes the sealing member 7 (7A, 7B, 7C, 7D, or 7E) at the end portion on the gas flow path 11 side, it is possible to prevent the exhaust gas as a corrosive fluid from entering the inside of the roller bearing 4.

Furthermore, since the sealing member 7 is reinforced by the second portion 52b of the flange portion 52 of the outer ring 5, the sealing property of the fluid by the sealing member 7 can be increased according to the present embodiment. Accordingly, even a high-pressure fluid can be appropriately sealed by the sealing member 7.

Furthermore, since the sealing member 7 in sliding contact with the rotation shaft 2 does not come into contact with the retainer 60, it is possible to prevent an increase in the operating torque of the roller bearing that may occur when the sealing member comes into contact with the retainer or the roller. Due to this, an increase in the operating torque of the EGR control valve can be prevented, and hence the motor for operation can be downsized. As a result, the EGR control valve itself can be downsized.

In addition, as shown in Figs. 2 to 4, 6, 7, and 8, when the sealing member closes the annular space between the rotation shaft 2 and the housing 1 on the axial outside of the flange portion 52, it is possible to prevent corrosion of the outer ring 5 due to contact with a corrosive fluid such as exhaust gas.

Thus, in the case where the roller bearing 4 includes the sealing member 7 for sealing the exhaust gas, it is not necessary to separately provide the sealing member as a single unit to be disposed apart from the bearing. Accordingly, the axial length of the support mechanism can be shortened as compared with a configuration in which the rotation shaft is rotatably supported by a double ball bearing. As a result, the housing 1 can be made compact, and hence the EGR control valve can be downsized.

The application of the roller bearing 4 is not limited to the EGR control valve of an automobile. Fluid control valves to which the roller bearing 4 can be applied include, for example, i) an intake flow rate control valve such as an electronically controlled throttle valve of an automobile, ii) an exhaust gas flow path switching valve for switching between a low-temperature exhaust gas flow path installed on the outlet side of an exhaust gas recirculation cooler and a bypass flow path (high-temperature exhaust gas flow path) for diverting the circulating exhaust gas from the exhaust gas recirculation cooler, and iii) an exhaust gas flow rate (pressure) control valve installed in the exhaust pipe (turbine housing of the turbocharger) of an engine. Alternatively, the roller bearing 4 may be applied to other types of exhaust control valve such as an exhaust throttle valve and an exhaust brake valve.

The fluid control valve to which the roller bearing 4 is applied may be a control valve of a vehicle or apparatus other than an automobile. For example, an air control valve of a fuel cell may be mentioned.

### (Variation 1)

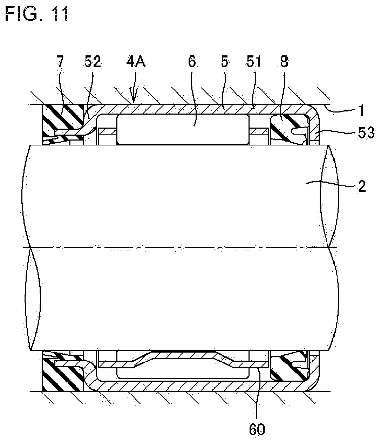

While in the above embodiment, the sealing member 7 is provided only on one axial side of the roller bearing 4, a sealing member 8 may also be provided on the other axial side as in a roller bearing 4A shown in Fig. 11. The sealing member 8 is a publicly known sealing member disposed inside the inward flange portion 53 so as to face the roller 6. In this case, the bearing can be filled with grease inside thereof. When the roller bearing 4 is used for an EGR control valve, it is desirable to use a type of grease that can be used in a high-temperature environment, such as urea grease and fluorine grease.

According to the roller bearing 4A shown in Fig. 11, although the sealing member 8 on the other side may come into contact with the retainer 60, there is an advantage that wear of at least one sealing member 7 can be prevented, compared with a configuration in which both sealing members come into contact with the retainer 60.

### (Variation 2)

The roller bearing may not include the retainer 60. In this case, movement of the roller 6 to one axial side is restricted by the flange portion 52 of the outer ring 5. Accordingly, the sealing member 7 does not come into contact with the roller 6, and hence wear of the sealing member 7 due to contact with the roller 6 can be prevented.

### (Variation 3)

The outer ring of the roller bearing may have a flange portion capable of holding the sealing member at both axial end portions. That is, the other axial side of the outer ring of the roller bearing may be provided with, in place of the above-described inward flange portion 53, a flange having the same structure as that of the flange portion 52 disposed on one axial side.

### (Variation 4)

Alternatively, the flange itself may not be provided on the other axial side of the outer ring of the roller bearing. That is, the outer ring may have a flange serving as the flange portion 52 only at one axial end portion. In other words, the roller bearing may not be a shell type roller bearing but a cylindrical roller bearing.

The embodiment disclosed here should be considered illustrative in all regards and not restrictive. It is intended that the scope of the present invention is set forth by the claims rather than by the above description and includes all modifications within the meaning and scope equivalent to the claims.

### Reference Signs List

- 1: housing
- 2: rotation shaft
- 3: ball bearing
- 4, 4A: roller bearing
- 5: outer ring
- 6: roller
- 7, 7A, 7B, 7C, 7D, 7E, 8: sealing member
- 11: exhaust gas flow path
- 12: hole portion
- 13: valve body
- 14: annular gap
- 51: cylindrical portion
- 52, 52A: flange portion
- 52a: first portion
- 52b: second portion
- 53: inward flange portion
- 60: retainer
- 71: inner diameter side sealing portion
- 72: outer diameter side sealing portion
- 73: outer sealing portion
- 74: lip

## Claims

1. A roller bearing, comprising:
an outer ring that has a cylindrical portion of which an inner circumferential surface constitutes a raceway surface, and a flange portion joined to at least one axial end portion of the cylindrical portion;
a plurality of rollers that roll on the raceway surface of the cylindrical portion and rotatably support a rotating element; and
a sealing member that is held by the flange portion, wherein:
the flange portion has a first portion extending radially inward from an end portion of the cylindrical portion and a second portion extending axially outward from a radial inner end portion of the first portion.

2. The roller bearing according to claim 1, further comprising:
a retainer that houses the rollers,
wherein the flange portion is disposed so as to restrict axial movement of the retainer.

3. The roller bearing according to claim 2, wherein the retainer axially faces a radial inner end portion of the first portion of the flange portion.

4. The roller bearing according to any of claims 1 to 3, wherein the sealing member includes an inner diameter side sealing portion that is disposed between an outer circumferential surface of the rotating element and the second portion of the flange portion.

5. The roller bearing according to any of claims 1 to 4, wherein:
the outer ring is fitted in a housing; and
the sealing member includes an outer diameter side sealing portion that is disposed between an inner circumferential surface of the housing and the second portion of the flange portion.

6. The roller bearing according to any of claims 1 to 3, wherein:
the outer ring is fitted in a housing; and
the sealing member is disposed between an outer circumferential surface of the rotating element and an inner circumferential surface of the housing so as to surround the second portion of the flange portion.

7. The roller bearing according to any of claims 1 to 6, wherein a plate thickness of the second portion of the flange portion is equal to or less than a plate thickness of the first portion.

8. The roller bearing according to any of claims 1 to 7, wherein the sealing member includes a lip that is in contact with an outer circumferential surface of the rotating element.

9. The roller bearing according to any of claims 1 to 3, wherein the sealing member includes a first region that is disposed between an inner circumferential surface of the housing into which the outer ring is fitted and the second portion of the flange portion and a second region that is disposed continuously to an axial outside of the first region between an inner circumferential surface of the housing and an outer circumferential surface of the rotating element and that has a lip that is in contact with an outer circumferential surface of the rotating element.

10. The roller bearing according to claim 9, wherein:
the first region is disposed in a contact state with an outer surface of the first portion of the flange portion; and
the second region has a facing portion that faces an axial outer end surface of the second portion of the flange portion in a non-contact state.

11. The roller bearing according to claim 10, wherein the facing portion includes a root portion of the lip.

12. The roller bearing according to claim 1, wherein:
the outer ring is fitted in a housing; and
an axis of an outer diameter surface or an inner diameter surface of the second portion of the flange portion is disposed inside an imaginary circle having a diameter of 0.5 mm about an axis of an inner circumferential surface of the housing.

13. The roller bearing according to any of claims 1 to 12, wherein the outer ring has the flange portion only on one axial side of the cylindrical portion, and has an inward flange portion extending radially inward on the other axial side of the cylindrical portion.
